# EUROPÄISCHE PATENTANMELDUNG

(11) **EP 0 826 706 A2**
(43) Veröffentlichungstag der Anmeldung: **04.03.1998**
(21) Anmeldenummer: 97113941.5
(22) Anmeldetag: 13.08.1997
(51) Int. Cl.: C08G 18/30, C08G 18/34

(54) **Schäumfähige Polyurethanzubereitungen mit gutem Fliessverhalten sowie ein Verfahren zur Herstellung geschäumter Polyurethan-Formteile**

(30) Priorität: 26.08.1996 DE 19634392
(71) Anmelder: BAYER AG, 51368 Leverkusen (DE)
(72) Erfinder: Rasshofer, Werner, Dr., 51061 Köln (DE); Gross, Thomas, 42929 Wermelskirchen (DE); Symannek, Achim, 42799 Leichlingen (DE)

(57) **Zusammenfassung**

Schäumfähiges PUR-System, dadurch gekennzeichnet, daß es aus
A) 100 Gew.-% einer Polyolkomponente, umfassend
   a) 50 bis 99 Gew.-%, bezogen auf das Gesamtgewicht von Komponente A), Rizinusöl,
   b) 0,9 bis 49,9 Gew.-%, bezogen auf das Gesamtgewicht von Komponente A), Kettenverlängerungs- und/oder Vernetzerkomponente mit reaktionsfähigen Hydroxylgruppen,
   c) 0,1 bis 5 Gew.-% Wasser, bezogen auf das Gesamtgewicht von Komponente A),
   d) gegebenenfalls weitere Hilfs- und Zusatzstoffe wie Katalysatoren, Trennmittel, Zellstabilisatoren, Entschäumer etc.
   und
B) einer Isocyanatkomponente sowie
C) gegebenenfalls weiteren Zusatzmitteln, Füllstoffen etc.
   besteht.

## Beschreibung

Die vorliegende Erfindung beschreibt ein schäumfähiges Polyurethansystem (nachfolgend PUR-System genannt) mit verbessertem Fließverhalten und verbessertem Energieaufnahmeverhalten. Unter einem PUR-System werden dabei eine Polyol- und eine Isocyanatkomponente verstanden, welche, gegebenenfalls unter Zusatz weiterer Hilfsstoffe, zu einem PUR-Schaumstoff umgesetzt werden. Die vorliegende Erfindung beschreibt ferner ein Verfahren zur Herstellung von geschäumten Formteilen aus dem erfindungsgemäßen Polyurethansystem.

Aufgabe der vorliegenden Erfindung war die Bereitstellung eines FCKW-freien schäumfähigen Polyurethansystems mit verbessertem Fließverhalten, insbesondere einstellbaren, wenn gewünscht extrem langen, Topfzeiten und sehr geringer Wärmetönung, und verbessertem Energieaufnahmeverhalten. Weitere Aufgabe der vorliegenden Erfindung war ferner die Bereitstellung eines Verfahrens zur Herstellung von geschäumten Formteilen aus dem erfindungsgemäßen Polyurethansystem.

Überraschenderweise wurde gefunden, daß die erfindungsgemäße Aufgabe durch Verwendung eines schäumfähigen PUR-Systems unter Verwendung von Rizinusöl gelöst werden konnte.

Gegenstand der vorliegenden Erfindung ist somit ein PUR-System, dadurch gekennzeichnet, daß es aus
A) 100 Gew.-% einer Polyolkomponente, umfassend
   a) 50 bis 99 Gew.-%, bezogen auf das Gesamtgewicht von Komponente A), Rizinusöl,
   b) 0,9 bis 49,9 Gew.-%, bezogen auf das Gesamtgewicht von Komponente A), Kettenverlängerungs- und/oder Vernetzerkomponente mit reaktionsfähigen Hydroxylgruppen,
   c) 0,1 bis 5 Gew.-% Wasser, bezogen auf das Gesamtgewicht von Komponente A),
   d) gegebenenfalls weiteren Hilfs- und Zusatzstoffen wie Katalysatoren, Trennmittel, Zellstabilisatoren, Entschäumern etc.
   und
B) einer Isocyanatkomponente sowie
C) gegebenenfalls weiteren Zusatzmitteln, Füllstoffen etc.
   besteht.

Bevorzugt besteht das PUR-System aus
A) 100 Gew.-% einer Polyolkomponente, umfassend
   a) 50 bis 98,98 Gew.-%, bezogen auf das Gesamtgewicht von Komponente A), Rizinusöl
   b) 0,9 bis 49,88 Gew.-%, bezogen auf das Gesamtgewicht von Komponente A), Kettenverlängerungs- und/oder Vernetzerkomponente mit reaktionsfähigen Hydroxylgruppen,
   c) 0,1 bis 5 Gew.-% Wasser, bezogen auf das Gesamtgewicht von Komponente A),
   e) 0,01 bis 5 Gew.-%, bezogen auf das Gesamtgewicht von Komponente A), Katalysatoren,
   f) 0,01 bis 5 Gew.-%, bezogen auf das Gesamtgewicht von Komponente A), Zellstabilisatoren,
   sowie gegebenenfalls
   d) weiteren Hilfs- und Zusatzstoffen wie Trennmittel, Flammschutzmittel etc.,
   und
B) einer Isocyanatkomponente sowie
C) gegebenenfalls weiteren Zusatzmitteln, Füllstoffen etc.

Weiterer Gegenstand der vorliegenden Erfindung sind geschäumte PUR-Formteile der Dichte 0,01 to/m³ bis 1,1 to/m³ (entsprechend 10 g/l bis 1 100 g/l; ohne Füllstoffe), dadurch gekennzeichnet, daß sie mittels eines PUR-Systems hergestellt werden, welches
A) 100 Gew.-% einer Polyolkomponente, umfassend
   a) 50 bis 98,98 Gew.-%, bezogen auf das Gesamtgewicht von Komponente A), Rizinusöl
   b) 0,9 bis 49,88 Gew.-%, bezogen auf das Gesamtgewicht von Komponente A), Kettenverlängerungs- und/oder Vernetzerkomponente mit reaktionsfähigen Hydroxylgruppen,
   c) 0,1 bis 5 Gew.-% Wasser, bezogen auf das Gesamtgewicht von Komponente A),
   e) 0,01 bis 5 Gew.-%, bezogen auf das Gesamtgewicht von Komponente A), Katalysatoren
   f) 0,01 bis 5 Gew.-%, bezogen auf das Gesamtgewicht von Komponente A), Zellstabilisatoren
   sowie gegebenenfalls
   d) weiteren Hilfs- und Zusatzstoffen wie Trennmittel, Flammschutzmittel etc.,
   und
B) einer Isocyanatkomponente sowie
C) gegebenenfalls weitere Zusatzmittel, Füllstoffe etc.
   enthält.

Ein weiterer Gegenstand der Erfindung ist ein Verfahren zur Herstellung geschäumter Formteile, bei dem man ein PUR-System aus
A) 100 Gew.-% einer Polyolkomponente, umfassend
   a) 50 bis 99 Gew.-%, bezogen auf das Gesamtgewicht von Komponente A), Rizinusöl,
   b) 0,9 bis 49,9 Gew.-%, bezogen auf das Gesamtgewicht von Komponente A), Kettenverlängerungs- und/oder Vernetzerkomponente mit reaktionsfähigen Hydroxylgruppen,
   c) 0,1 bis 5 Gew.-% Wasser, bezogen auf das Gesamtgewicht von Komponente A),
   d) gegebenenfalls weiteren Hilfs- und Zusatzstoffen wie Katalysatoren, Trennmittel, Zellstabilisatoren, Entschäumern etc.
   und
B) eine Isocyanatkomponente sowie
C) gegebenenfalls weitere Zusatzmittel, Füllstoffe etc.
   einsetzt.

Die erfindungsgemäß hergestellten Formteile zeigen im Audi-Druck-Versuch einen waagerechten Kurvenverlauf.

Weitere Vorteile der erfindungsgemäßen PUR-Systeme:
- sehr geringe Wasseraufnahme
- hohe Steifigkeit bei geringer Dichte
- geringe Sprödigkeit trotz hoher Steifigkeit und geringer Dichte
- sehr geringe Dichten sind durch Wasserverschäumung möglich, ohne daß es zu Kernverfärbungen kommt.

Die erfindungsgemäßen Zubereitungen umfassen die Komponenten A) und B) sowie gegebenenfalls C).

Komponente A) ist die Polyolkomponente und umfaßt die Einzelkomponenten a) bis c) bzw. a) bis c) und e) und f).

### Komponente a:

Bei der Komponente a) handelt es sich um Rizinusöl der bekannten kommerziell erhältlichen Reinheitsgrade.

### Komponente b:

Bei den mitzuverwendenden Polyolen oder Polyaminen handelt es sich
1) um beliebige Verbindungen mit mindestens zwei gegenüber Isocyanatgruppen reaktionsfähigen Gruppen des Molekulargewichtsbereichs 18, 60 bis 1799, vorzugsweise 62 bis 500, insbesondere 62 bis 400. In Betracht kommen beispielsweise mehrwertige Alkohole wie sie in EP-B-0 081 701, Kolonne 9, Zeilen 32 bis 50, offenbart sind; insbesondere sind als Komponenten b) folgende Alkohole bevorzugt: EG, DEG, TEG, PG, DPG, TPG, Butandiol, Hexandiol. Ferner in Betracht kommen beispielsweise auch Ethergruppen aufweisende aliphatische Polyamine, beispielsweise endständige primäre Aminogruppen aufweisende Polypropylenoxide des genannten Molekulargewichtsbereichs oder beispielsweise auch Ethergruppen aufweisende aliphatische Polyhydroxylverbindungen, z.B. Addukte von Ethylen- und/oder Propylenoxid mit Trimethylolpropan, Pentaerythrit oder Ethylendiamin. In Betracht kommen auch cycloaliphatische Ringe aufweisende Polyole wie beispielsweise 1,4-Dihydroxycyclohexan oder 1,4-Bis-hydroxymethyl-cyclohexan und Polyamine wie beispielsweise 1,4-Cyclohexan-diamin, Isophorondiamin, Bis-(4-aminocyclo-hexyl)-methan, Bis-(3-methyl-4-aminocyclohexyl)-methan. Polyole sind gegenüber Polyaminen bevorzugt.
2) handelt es sich bei Komponente b um Verbindungen mit gegenüber Isocyanatgruppen reaktionsfähigen Gruppen des Molekulargewichtsbereichs 1 800 bis 12 000, vorzugsweise 3 000 bis 7 000 oder um Gemische derartiger Verbindungen, wobei die Komponente b im Sinne der Isocyanat-Additionsreaktion eine über 2,5, vorzugsweise bei 2,6 bis 3,0 und besonders bevorzugt bei 2,8 bis 3,0, liegende (mittlere) Funktionalität aufweist. Besonders gut als Komponente b geeignete Verbindungen sind diesen Ausführungen entsprechende Polyetherpolyole bzw. Gemische von Polyetherpolyolen, wie sie in DE-AS 2 622 951, Kolonne 6, Zeile 65 - Kolonne 7, Zeile 47, offenbart sind, wobei auch erfindungsgemäß solche Polyetherpolyole bevorzugt sind, deren Hydroxylgruppen zumindest zu 50 %, vorzugsweise zumindest zu 80 %, aus primären Hydroxylgruppen bestehen. Auch die in DE-AS 2 622 951 beispielhaft offenbarten, Hydroxylgruppen aufweisenden Polyester, Polythioether, Polyacetale, Polycarbonate oder Polyesteramide sind im Prinzip als erfindungsgemäße Komponente b geeignet, sofern sie den oben gemachten Ausführungen entsprechen, jedoch gegenüber den Polyetherpolyolen weniger bevorzugt.

Als Ausgangskomponente b ebenfalls gut geeignet sind obigen Ausführungen entsprechende Aminopolyether oder Gemische von Aminopolyethern, d.h. Polyether mit gegenüber Isocyanatgruppen reaktionsfähigen Gruppen, die sich zumindest zu 50 Äquivalent-%, vorzugsweise zumindest zu 80 Äquivalent-%, aus primären und/oder sekundären, aromatisch oder aliphatisch, vorzugsweise aromatisch gebundenen Aminogruppen und zum Rest aus primären und/oder sekundären, aliphatisch gebundenen Hydroxylgruppen zusammensetzen. Geeignete derartige Aminopolyether sind beispielsweise die in EP-B-00 81 701, Kolonne 4, Zeile 26 bis Kolonne 5, Zeile 40, genannten Verbindungen.

Ebenfalls als Ausgangskomponente b geeignet, jedoch weniger bevorzugt, sind Aminogruppen aufweisende Polyester des obengenannten Molekulargewichtsbereichs.

Als Komponente b können selbstverständlich auch beliebige Gemische der beispielhaft genannten Polyhydroxylverbindungen mit den beispielhaft genannten Aminopolyethern verwendet werden. Solche Verbindungen mit einem MG von 1800 - 12 000 werden nur optional in entspechender Menge verwendet.

### Komponente c:

Wasser oder Wasser-freisetzende Komplexe, Addukte, Einschlußverbindungen etc., bevorzugt ist freies Wasser.

### Komponenten d-j:

Bei den bei der Herstellung der Polyisocyanat-Polyadditionsprodukte gegebenenfalls mitzuverwendenden Hilfs- und Zusatzmitteln d) handelt es sich beispielsweise um innere Formtrennmittel, Katalysatoren (Komponente e)) für die Polyisocyanat-Polyadditionsreaktion, Treibmittel, Wasser, oberflächenaktive Zusatzstoffe, Zellregler (Komponente f)), organische und anorganische Pigmente, Farbstoffe, UV- und Thermo-Stabilisatoren, Weichmacher oder fungistatisch bzw. bakterostatisch wirkende Substanzen, wie sie beispielsweise in EP-B-0 081 701, Kolonne 6, Zeile 40 bis Kolonne 9, Zeile 31, beispielhaft beschrieben sind.

Als Katalysatoren können z.B. tertiäre Amine, Zinnverbindungen und/oder organische Säuren wie Essigsäure verwendet werden.

### Komponente B:

Geeignete aromatische Polyisocyanate sind beliebige aromatische Polyisocyanate mit einem NCO-Gehalt von 10 bis 50 Gew.-%, z.B. Methylendiphenylendiisocyanate und Toluylendiisocyanate.

Zur Herstellung der Polyisocyanat-Polyadditionsprodukte geeignete Isocyanate eines über 137, vorzugsweise bei 168 bis 290, liegenden Molekulargewichts mit ausschließlich (cyclo)aliphatisch gebundenen Isocyanatgruppen wie beispielsweise 1,6-Diisocyanatohexan, 1,12-Diisocyanatododecan, 1,3-Diisocyanatocyclobutan, 1,3- und 1,4-Diisocyanato-cyclohexan, sowie beliebige Gemische dieser Isomeren, 1-Isocyanato-3,3,5-trimethyl-5-isocyanatomethyl-cyclohexan (IPDI), 2,4- und/oder 4,4'-Diisocyanatodicyclohexylmethan oder beliebige Gemische derartiger einfacher (cyclo)aliphatischer Polyisocyanate.

Ebenfalls geeignet sind durch Urethan-, Allophanat-, Isocyanurat-, Harnstoff-, Biuret- und/oder Uretdiongruppen modifizierte Polyisocyanate auf Basis der beispielhaft genannten aromatischen und (cyclo)aliphatischen Diisocyanate oder auf Basis von deren Gemischen, Gemische von unmodifizierten Diisocyanaten mit den genannten modifizierten Polyisocyanaten können ebenfalls als Komponente B verwendet werden.

### Komponente C:

Zu den gegebenenfalls mitzuverwendenden Hilfs- und Zusatzstoffen gehören die an sich bekannten Füll- und/oder Verstärkungsstoffe wie beispielsweise Bariumsulfat, Kieselgur, Schlämmkreide, Mica oder insbesondere Glasfasern, LC-Fasern, Glasflakes, Glaskugeln, Aramid- oder Kohlefasern. Sie werden bevorzugt der Komponente A einverleibt, im Falle von kontinuierlichen Verstärkungsstoffen auch in das Werkzeug eingelegt. Weiter brauchbar sind auch Materialien, die zur Rohdichteerniedrigung eingesetzt werden, wie z.B. Bimsstein oder andere geringdichte synthetische oder natürlich vorkommende anorganische Materialien.

Die Verarbeitung kann bei langsamen Systemen manuell vorgenommen werden, bei schnelleren Systemen ist maschinelle Vermischung und maschineller Eintrag in Werkzeuge vorzuziehen. Die Verarbeitung von PUR ist bekannt, Details sind z.B. nachzulesen in G. Oertel (Herausgeber), Polyurethane, Hanser-Verlag, München, 3. Auflage 1993.

Die erfindungsgemäßen Formmassen können z.B. im Bau- und Freizeitsektor zur Ausschäumung von beliebigen Hohlräumen, Hohlkammerprofilen oder in der Automobilindustrie zur Herstellung von energieabsorbierenden Schaumstoffen verwendet werden.

### Beispiele

### Beispiel 1

### Polyol-Rezeptur (OH-Zahl = 516 mg KOH/g)

| | |
|---|---|
| Rizinusöl | 77 Teile |
| Hydroxyl-Vernetzer mit OH-Zahl 1 000, hergestellt durch Addition von Propylenoxid auf Trimethylolpropan | 4 Teile |
| Diethylenglykol | 16 Teile |
| Zellstabilisator auf Polysiloxan-Basis (SR 242, Fa. Goldschmidt) | 1 Teil |
| Wasser | 3 Teile |
| Essigsäure | 0,1 Teil |
| tert. Aminkatalysator (Dabco 33 LV, Fa. Air Products) | 1 Teil |

Isocyanat-Komponente (polymeres MDI) mit 31,5 % NCO;
Kennzahl 110 (Desmodur 44V20 der Bayer AG)

### Verarbeitung:

Startzeit: 15 sec
Steigzeit: 25 sec
Aushärtezeit=Fadenziehzeit: 22 sec
Werkzeug: Aluminium, Trennmittel: Wachs
Werkzeugtemperatur: 25°C
Rohdichte: 55 g/l

### Mechanische Eigenschaften:

Stauchhärte (70 % Stauchung): 94 kPa.

### Beispiel 2

### Polyol-Rezeptur (OH-Zahl = 406 mg KOH/g)

| | |
|---|---|
| Rizinusöl | 77 Teile |
| Hydroxyl-Vernetzer mit OH-Zahl 1 000, hergestellt durch Addition von Propylenoxid auf Trimethylolpropan | 4 Teile |
| Diethylenglykol | 16 Teile |
| Zellstabilisator auf Polysiloxan-Basis (SR 242) | 1 Teil |
| Wasser | 1 Teil |

Isocyanat-Komponente: Desmodur 44V20 der Bayer AG mit 31,5 % NCO;
Kennzahl 110

### Verarbeitung:

Startzeit: 285 sec
Steigzeit: ca. 20 min
Fadenziehzeit: ca. 15 min
Werkzeug: Aluminium, Trennmittel: Wachs
Werkzeugtemperatur: 25°C
Rohdichte: 150 g/l

### Mechanische Eigenschaften:

Stauchhärte (70 % Stauchung): 1 162 kPa.

Diese Formulierung ist in der Lage, längere Fließwege von mehreren Metern auch mit geringen Wandstärken zu fließen und extrem gleichmäßig aufzuschäumen. Die Zellstruktur, die Uniformität der Zelle und die Dichte sind z.B. bei einem Fließweg von 3 m senkrecht nach oben völlig identisch.

## Patentansprüche

1. Schäumfähiges PUR-System, dadurch gekennzeichnet, daß es aus
A) 100 Gew.-% einer Polyolkomponente, umfassend
a) 50 bis 99 Gew.-%, bezogen auf das Gesamtgewicht von Komponente A), Rizinusöl,
b) 0,9 bis 49,9 Gew.-%, bezogen auf das Gesamtgewicht von Komponente A), Kettenverlängerungs- und/oder Vernetzerkomponente mit reaktionsfähigen Hydroxylgruppen,
c) 0,1 bis 5 Gew.-% Wasser, bezogen auf das Gesamtgewicht von Komponente A),
d) gegebenenfalls weiteren Hilfs- und Zusatzstoffen wie Katalysatoren, Trennmittel, Zellstabilisatoren, Entschäumern etc.
und
B) einer Isocyanatkomponente sowie
C) gegebenenfalls weiteren Zusatzmitteln, Füllstoffen etc.
besteht.

2. Schäumfähiges PUR-System gemäß Anspruch 1, dadurch gekennzeichnet, daß es aus
A) 100 Gew.-% einer Polyolkomponente, umfassend
a) 50 bis 98,98 Gew.-%, bezogen auf das Gesamtgewicht von Komponente A), Rizinusöl
b) 0,9 bis 49,88 Gew.-%, bezogen auf das Gesamtgewicht von Komponente A), Kettenverlängerungs- und/oder Vernetzerkomponente mit reaktionsfähigen Hydroxylgruppen,
c) 0,1 bis 5 Gew.-% Wasser, bezogen auf das Gesamtgewicht von Komponente A),
e) 0,01 bis 5 Gew.-%, bezogen auf das Gesamtgewicht von Komponente A), Katalysatoren,
f) 0,01 bis 5 Gew.-%, bezogen auf das Gesamtgewicht von Komponente A), Zellstabilisatoren,
sowie gegebenenfalls
d) weiteren Hilfs- und Zusatzstoffen wie Trennmittel, Flammschutzmittel etc.,
und
B) einer Isocyanatkomponente sowie
C) gegebenenfalls weiteren Zusatzmitteln, Füllstoffen etc.
besteht.

3. Geschäumte Formteile der Dichte 0,01 to/m³ bis 1,1 to/m³, hergestellt aus einem PUR-System, gemäß einem der Ansprüche 1 bis 2.

4. Geschäumte Formteile der Dichte 0,01 to/m³ bis 1,1 to/m³ nach Ansprüchen 1 bis 4, dadurch gekennzeichnet, daß der Rizinusöl-Anteil 70 bis 95 Gew.-%, bevorzugt 80 bis 90 Gew.-%, beträgt.

5. Verfahren zur Herstellung geschäumter Formteile, dadurch gekennzeichnet, daß ein PUR-System aus
A) 100 Gew.-% einer Polyolkomponente, umfassend
a) 50 bis 99 Gew.-%, bezogen auf das Gesamtgewicht von Komponente A), Rizinusöl,
b) 0,9 bis 49,9 Gew.-%, bezogen auf das Gesamtgewicht von Komponente A), Kettenverlängerungs- und/oder Vernetzerkomponente mit reaktionsfähigen Hydroxylgruppen,
c) 0,1 bis 5 Gew.-% Wasser, bezogen auf das Gesamtgewicht von Komponente A),
d) gegebenenfalls weiteren Hilfs- und Zusatzstoffen wie Katalysatoren, Trennmittel, Zellstabilisatoren, Entschäumern etc.
und
B) einer Isocyanatkomponente sowie
C) gegebenenfalls weiteren Zusatzmitteln, Füllstoffen
eingesetzt wird.
